(19) Europäisches Patentamt
European Patent Office
Office européen des brevets

(11) Publication number: **0 054 308**
**A1**

(12) # EUROPEAN PATENT APPLICATION

(21) Application number: 81110506.3

(22) Date of filing: 16.12.81

(51) Int. Cl.[3]: C 08 L 67/02
C 07 F 9/145, C 08 K 5/52

(30) Priority: 17.12.80 US 217436

(43) Date of publication of application: 23.06.82 Bulletin 82/25

(84) Designated Contracting States: AT BE CH DE FR GB IT LI NL SE

(71) Applicant: UNION CARBIDE CORPORATION
Old Ridgebury Road
Danbury Connecticut 06817(US)

(72) Inventor: Gardner, Hugh Chester
1273 Millstone River Road
Somerville New Jersey 08876(US)

(72) Inventor: Matzner, Markus
23 Marshall Drive
Edison New Jersey 08817(US)

(72) Inventor: Robeson, Lloyd Mahlon
RD 1, Box 244
Whitehouse Station New Jersey 08889(US)

(74) Representative: Wuesthoff, Franz, Dr.-Ing. et al,
Patentanwälte Wuesthoff -v. Pechmann-Behrens-Goetz
Schweigerstrasse 2
D-8000 München 90(DE)

(54) **Stabilized polyarylate compositions.**

(57) Described herein are molding compositions comprising a blend of (a) a polyarylate derived from a dihydric phenol and an aromatic carboxylic acid and (b) a diphosphite and/or diphosphonite and, optionally, at least one thermoplastic polymer. The polyarylate compositions exhibit improved thermal and oxidative stability.

EP 0 054 308 A1

PATENTANWÄLTE
WUESTHOFF - v. PECHMANN - BEHRENS - GOETZ

PROFESSIONAL REPRESENTATIVES BEFORE THE EUROPEAN PATENT OFFICE
MANDATAIRES AGREES PRES L'OFFICE EUROPEEN DES BREVETS

D-8000 MÜNCHEN 90
SCHWEIGERSTRASSE 2
TELEFON (089) 66 20 51
TELEGRAMM PROTECTPATENT
TELEX 524070

0054308

13,045



This invention is directed to a molding composition comprising a blend of (a) a polyarylate derived from a dihydric phenol and an aromatic dicarboxylic acid an (b) and aromatic diphosphite and/or diphosphonite and optionally, at least one thermoplastic polymer. Also, this invention is directed to novel diphosphites.

Polyarylates are polyesters derived from a dihydric phenol, particularly 2,2-bis(4-hydroxyphenyl)-propane also identified as bisphenol-A, and an aromatic dicarboxylic acid, particularly mixtures of terephthalic and isophthalic acids. These polyarylates are high temperature, high performance thermoplastic polymers with a good combination of mechanical properties.

However, polyarylates have a glass transition temperature (Tg) of about 190°C and must be processed at temperatures of about 400°C in injection molding applications. At such high processing temperatures, the polyarylates tend to yellow. This yellowing is unsuitable for many applications. Therefore, it is desirable to stabilize the polyarylate to minimize such yellowing under the processing conditions.

Additionally the unstabilized polyarylates degrade to materials with lower molecular weights which results in lower properties than desired, volatile degradation products, and undesirable foaming.

## DESCRIPTION OF THE INVENTION

It has now been found that when a particular diphosphite and/or diphosphonite are added to polyarylates or polyarylates in combination with thermoplastic polymers, the resultant composition have improved thermal and oxidative stability.

Specifically, the molding composition of this invention comprises a blend of:

(a) a polyarylate derived from at least one dihydric phenol and at least one aromatic dicarboxylic acid,

(b) at least one diphosphite and/or diphosphonite, and optionally,

(c) at least one thermoplastic polymer.

The thermoplastic polymers suitable for use herein include a polyester, an aromatic polycarbonate, a styrene polymer, a poly(alkyl acrylate), a polyurethane, a vinyl chloride polymer, a poly(aryl ether), a copolyetherester block polymer, or a polyhydroxyether.

The diphosphites and/or diphosphonites are of the following formula:

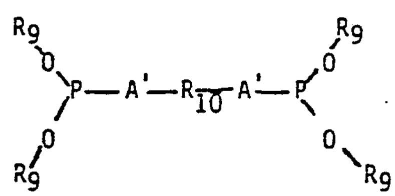

wherein A' is O or a bond; $R_{10}$ is an aromatic radical and $R_9$'s are independently alkyl or aromatic radicals.

Preferably, the diphosphites and/or diphosphonites are of the following formula:

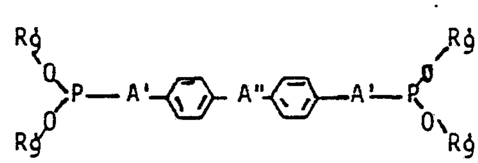

wherein A' is as defined above, A" is a direct bond, S, $SO_2$, O, CO, alkylene or alkylidene containing from 2 to about 8 carbon atoms and the $R'_9$'s are independently aliphatic radicals containing from 1 to about 25 carbon atoms, or substituted or

unsubstituted aromatic radicals of from 6 to 30 carbon atoms. $R'_9$ is preferably selected from the following: methyl, ethyl, isopropyl, butyl, isobutyl, phenyl, alkyl or aryl substituted phenyl (wherein the alkyl group may contain up to about 25 carbon atoms and may be linear or branched), halogen substituted phenyl, hydroxy substituted aryl, naphthyl, alkyl, or aryl substituted naphthyl, halogen substituted naphthyl, and the like.

The preferred groups can be represented as:

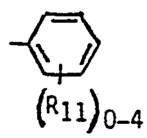

, and

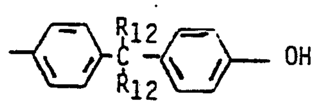

wherein $R_{11}$ is independently alkyl of 1 to 6 carbon atoms and the $R_{12}$'s are independently alkyl of 1 to 6 carbon atoms.

A preferred diphosphonite is tetrakis [2,4-di-tert-butylphenyl]-4,4'-biphenylene diphosphonite and has the following formula:

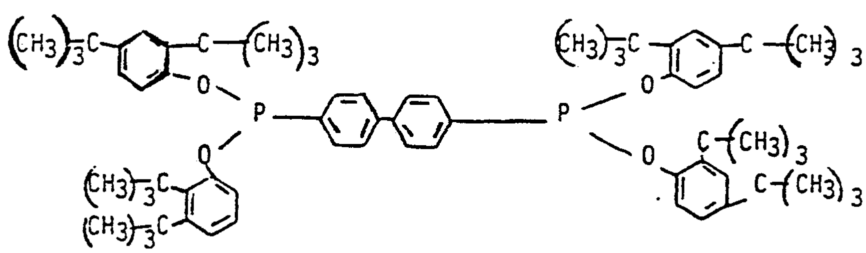

Such material is commercially available under the designation Sandostab P-EPQ (Sandoz Corporation).

Preferred diphosphites have the following formula:

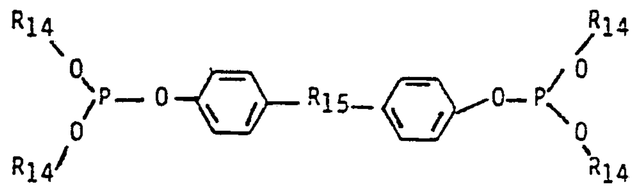

wherein $R_{15}$ is selected from a direct bond, O, CO, S, $SO_2$, $C(CH_3)_2$, and $R_{14}$ is selected from the following:

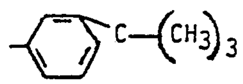

,

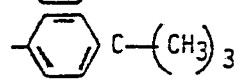

, or

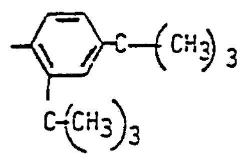

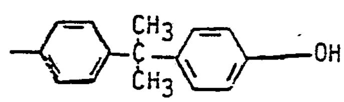

The diphosphites and/or diphosphonites are used in amounts from 0.02 to about 2.5, preferably from about 0.05 to about 0.50 percent by weight.

The polyarylate is used in amounts of from about 20 to about 99.98, preferably from about 60 to about 99.95 percent by weight; and when used, the thermoplastic polymer is used in amounts of from about 1 to about 80, preferably from about 10 to about 50 percent by weight.

Polyarylates

The polyarylates of this invention are derived from a dihydric phenol and at least one aromatic dicarboxylic acid.

A particularly desirable dihydric phenol is of the following formula:

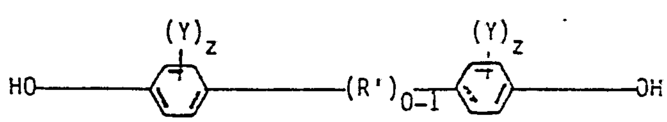

wherein Y is selected from alkyl groups of 1 to 4 carbon atoms, chlorine or bromine, each z, independently, has a value of from 0

to 4, inclusive, and R' is a divalent saturated or unsaturated aliphatic hydrocarbon radical, particularly an alkylene or alkylidene radical having from 1 to 3 carbon atoms, or a cycloalkylidene or cycloalkylene radicals having up to and including 9 carbon atoms. The preferred dihydric phenol is bisphenol-A. The dihydric phenols may be used individually or in combination.

The aromatic dicarboxylic acids that may be used in this invention include terephthalic acid, isophthalic acid, any of the naphthalene dicarboxylic acids and mixtures thereof, as well as alkyl substituted homologs of these carboxylic acids, wherein the alkyl group contains from 1 to about 4 carbon atoms, and acids containing other inert substituents, such as halides, alkyl or aryl ethers, and the like. Preferably, mixtures of isophthalic and terephthalic acids are used. The isophthalic acid to terephthalic acid ratio in the mixture is about 20:80 to about 100:0, while the most preferred acid ratio is about 75:25 to about 50:50. Also, from about 0.5 to about 20 percent of aliphatic diacids containing from 2 to about 10 carbon atoms, such as adipic acid, sebacic acid, and the like may be additionally used in the polymerization reaction.

The polyarylates of the present invention can be prepared by any of the well known prior art polyester forming reactions, such as the reaction of the acid chlorides of the aromatic dicarboxylic acids with the dihydric phenols; the reaction of the diaryl esters of the aromatic dicarboxylic acids with the dihydric phenols; or the reaction of the aromatic diacids with diester derivatives of the dihydric phenol. These processes are described in, for example, U.S. Patents 3,317,464; 3,948,856; 3,780,148; 3,824,213 and 3,133,898.

Preferably, the polyarylates used in this invention are

prepared by the process described in U.S. Patent Application Serial No. 189,561, filed September 23, 1980, in the names of L. M. Maresca, et al. and titled "Improved Process For Preparing Polyarylates". This application describes an improved process for preparing a polyarylate having a reduced viscosity of from about 0.5 to greater than 1.0 dl/gm which process comprises the following steps:

(a) reacting an acid anhydride derived from an acid containing from 2 to 8 carbon atoms with at least one dihydric phenol to form the corresponding diester; and

(b) reacting said diester with at least one aromatic dicarboxylic acid at a temperature sufficient to form the polyarylate, wherein the improvement comprises removing residual acid anhydride, after formation of the dihydric phenol diester, so that its concentration is less than about 1500 parts per million.

Thermoplastic Polymers

The thermoplastic polymers suitable for use in this invention are selected from the group consisting of a polyester polymer, an aromatic polycarbonate, a styrene polymer, an alkyl acrylate polymer, a polyurethane, a vinyl chloride polymer, a poly(aryl ether), a copolyetherester block polymer, a polyhydroxyether, or combinations thereof.

A. Polyesters

The polyesters which are suitable for use herein are derived from an aliphatic or cycloaliphatic diol, or mixtures thereof, containing from 2 to about 10 carbon atoms and at least one aromatic dicarboxylic acid. The polyesters which are derived from an aliphatic diol and an aromatic dicarboxylic acid have repeating units of the following general formula:

(I) 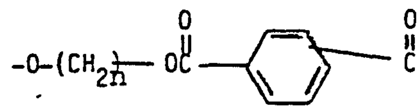

wherein n is an integer of from 2 to 4.

The preferred polyester is poly(ethylene terephthalate).

Also contemplated herein are the above polyesters with minor amounts, e.g., from 0.5 to about 2 percent by weight, of units derived from aliphatic acids and/or aliphatic polyols, to form copolyesters. The aliphatic polyols include glycols, such as poly(ethylene glycol). These can be made following the teachings of, for example, U.S. Patents 2,465,319 and 3,047,539.

The polyesters which are derived from a cycloaliphatic diol and an aromatic dicarboxylic acid are prepared by condensing either the cis- or trans-isomer (or mixtures thereof) of, for example, 1,4-cyclohexanedimethanol with an aromatic dicarboxylic acid so as to produce a polyester having recurring units of the following formula:

(II) 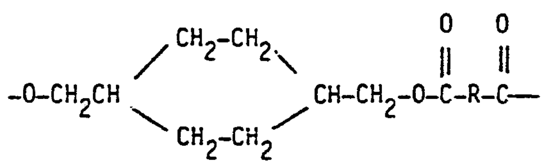

wherein the cyclohexane ring is selected from the cis- and trans-isomers thereof and R represents an aryl radical containing 6 to 20 carbon atoms and which is the decarboxylated residue derived from an aromatic dicarboxylic acid.

Examples of aromatic dicarboxylic acids indicated by R in formula II, are isophthalic or terephthalic acid, 1,2-di(p-carboxyphenyl)ethane, 4,4'-dicarboxydiphenyl ether, etc., and mixtures of these. All of these acids contain at least one aromatic nucleus. Fused rings can also be present, such as in 1,4- or 1,5-naphthalenedicarboxylic acids. The preferred

dicarboxylic acids are terephthalic acid or a mixture of terephthalic and isophthalic acids.

A preferred polyester may be derived from the reaction of either the cis- or trans-isomer (or a mixture thereof) of 1,4-cyclohexanedimethanol with a mixture of isophthalic- and terephthalic acids. These polyesters have repeating units of the formula:

(III) 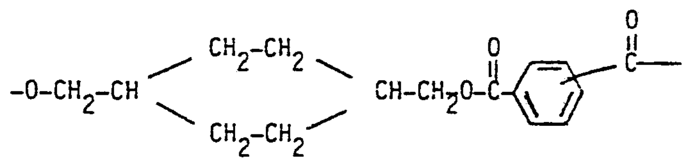

Another preferred polyester is a copolyester derived from a cyclohexane dimethanol, an alkylene glycol and an aromatic dicarboxylic acid. These copolyesters are prepared by condensing either the cis- or trans-isomer (or mixtures thereof) of, for example, 1,4-cyclohexanedimethanol and an alkylene glycol with an aromatic dicarboxylic acid so as to produce a copolyester having repeating units of the following formula:

(IV) 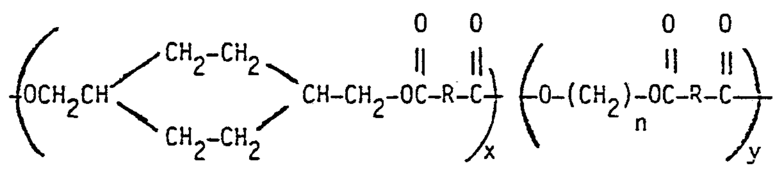

wherein the cyclohexane ring is selected from the cis- and trans-isomers thereof, R is as previously defined, n is an integer of 2 to 4, the x units comprise from about 10 to about 90 percent by weight and the y units comprise from about 10 to about 90 percent by weight.

The preferred copolyester may be derived from the reaction of either the cis-or trans-isomer (or mixtures thereof) of 1,4-cyclohexanedimethanol and ethylene glycol with terephthalic

acid in a molar ratio of 1:2:3. These copolyesters have repeating units of the following formula:

(V) 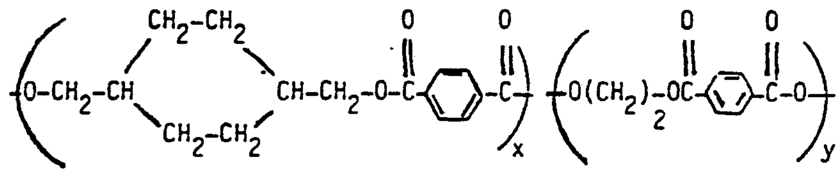

wherein x and y are as previously defined.

The polyester as described herein are either commercially available or can be produced by methods well known in the art, such as those set forth in, for example, U.S. Patent 2,901,466.

The polyesters used herein have an intrinsic viscosity of from about 0.4 to about 2.0 dl/g. as measured in a 60:40 phenol/tetrachloroethane mixture or similar solvent at 23-30°C.

B. Aromatic Polycarbonate

The thermoplastic aromatic polycarbonates that can be employed herein are homopolymers and copolymers and mixtures thereof, which have an intrinsic viscosity of from about 0.4 to about 1.0 dl./g. as measured in methylene chloride at 25°C. The polycarbonates are prepared by reacting a dihydric phenol with a carbonate precursor. Typical of some of the dinydric phenols that may be employed are bisphenol-A, bis(4-hydroxyphenyl)methane, 2,2-bis(4-hydroxy-3-methylphenyl)propane, 4,4-bis(4-hydroxyphenyl) heptane, 2-2-(3,5,3', 5'-tetrabromo-4,4'-dihydroxydiphenyl)propane, (3,3'-dichloro-4,4'-dihydroxydiphenyl)methane, and the like. Other dihydric phenols of the bisphenol type are described in, for example, U.S. Patents 2,999,835, 3,028,365 and 3,334,154.

It is, of course, possible to employ two or more different dihydric phenols or a copolymer of a dihydric phenol with a glycol or with hydroxy or acid terminated polyesters, or with a dibasic acid in the event a carbonate copolymer or

inter-polymer rather than a homopolymer is desired for use in the preparation of the aromatic carbonate polymer.

The carbonate precursor may be either a carbonyl halide, a carbonate ester, or a haloformate. The carbonyl halides which can be employed herein are carbonyl bromide, carbonyl chloride and mixtures thereof. Typical of the carbonate esters which may be employed herein are diphenyl carbonate, di-(halophenyl)carbonates, such as di-(chlorophenyl)carbonate or di-(bromophenyl)carbonate, etc., di-(alkylphenyl)carbonates such as di(tolyl)carbonate, di(naphthyl)carbonate, di(chloronaphthyl)carbonate, etc. or mixtures thereof. The haloformates suitable for use herein include bis-haloformate of dihydric phenols for example, bischloroformates of bisphenol-A, of hydroquinone, etc. or glycols for example, bishaloformates of ethylene glycol, neopentyl glycol, polyethylene glycol, etc. While other carbonate precursors will be apparent to those skilled in the art, carbonyl chloride, also known as phosgene, is preferred.

The aromatic polycarbonate polymers may be prepared by methods well known in the art by using phosgene or a haloformate and by employing a molecular weight regulator, an acid acceptor and a catalyst. The molecular weight regulators which can be employed in carrying out the process include monohydric phenols, such as phenol, para-tertiary-butylphenol, para-bromophenol, primary and secondary amines, etc. Preferably, a phenol is employed as the molecular weight regulator.

A suitable acid acceptor may be either an organic or an inorganic acid acceptor. A suitable organic acid acceptor is a tertiary amine and includes materials, such as pyridine, triethylamine, dimethylaniline, tributylamine, etc. The inorganic acid

acceptor may be one which can be either a hydroxide, a carbonate, a bicarbonate, or a phosphate of an alkali or alkaline earth metal.

The catalysts which are employed herein can be any of the suitable catalysts that aid the polymerization of, for example, bisphenol-A with phosgene. Suitable catalysts include tertiary amines, such as triethylamine, tripropylamine, N,N-dimethylaniline, quaternary ammonium compounds, such as tetraethylammonium bromide, cetyl triethyl ammonium bromide, tetra-n-heptylammonium iodide, and quaternary phosphonium compounds, such as n-butyltriphenyl-phosphonium bromide and methyl-triphenyl phosphonium bromide.

The polycarbonates can be prepared in a one-phase (homogeneous solution) or two-phase (interfacial) systems when phosgene, or a haloformate are used. Bulk reactions are possible when the diarylcarbonate precursors are used.

Also, aromatic polyester carbonates may be used. These are described in, for example, U.S. Patent 3,169,121. The preferred polyester carbonate results from the condensation of phosgene, terephthaloyl chloride, isophthaloyl chloride with bisphenol-A and a small amount of p-tertbutylphenol.

C. Styrene Resin

The styrene resins suitable for use herein are ABS type polymers, the molecules of which contain two or more polymeric parts of different compositions that are bonded chemically. The polymer is preferably prepared by polymerizing a conjugated diene, such as butadiene or a conjugated diene with a monomer copolymerizable therewith, such as styrene, to provide a polymeric backbone. After formation of the backbone, at least one grafting monomer, and preferably two, are polymerized in the presence of

the prepolymerized backbone to obtain the graft polymer. These resins are prepared by methods well known in the art.

The backbone polymer, as mentioned, is preferably a conjugated diene polymer such as polybutadiene, polyisoprene, or a copolymer, such as butadiene-styrene, butadiene-acrylonitrile, or the like.

The specific conjugated diene monomers normally utilized in preparing the backbone of the graft polymer are generically described by the following formula:

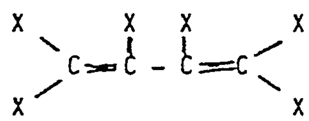

wherein X is selected from the group consisting of hydrogen, alkyl groups containing from one to five carbon atoms, chlorine or bromine. Examples of dienes that may be used are butadiene, isoprene, 1,3 - heptadiene, methyl-1,3-pentadiene, 2,3 - dimethyl-1,3-butadiene, 2-ethyl - 1,3-pentadiene; 1,3- and 2,4-hexadienes, chloro and bromo substituted butadienes such as dichlorobutadiene, bromobutadiene, dibromobutadiene, mixtures thereof, and the like. A preferred conjugated diene is butadiene.

One monomer or group of monomers that may be polymerized in the presence of the prepolymerized backbone are monovinylaromatic hydrocarbons. The monovinylaromatic monomers utilized are generically described by the following formula:

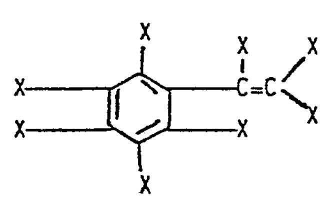

wherein X is as previously defined. Examples of the monovinylaromatic compounds and alkyl-,cycloalkyl-, aryl-,

alkaryl-, aralkyl-, alkoxy-, aryloxy-, and other substituted vinylaromatic compounds include styrene, 3-methylstyrene; 3,5-diethylstyrene, 4-n-propylstyrene , α-methylstyrene, α-methyl vinyltoluene, α-chlorostyrene, α-bromostyrene, dichlorostyrene, dibromostyrene, tetra-chlorostyrene, mixtures thereof, and the like. The preferred monovinylaromatic hydrocarbons used are styrene and/or α-methylstyrene.

A second group of monomers that may be polymerized in the presence of the prepolymerized backbone are acrylic monomers such as acrylonitrile, substituted acrylonitrile and/or acrylic acid esters, exemplified by acrylonitrile, and alkyl acrylates sucn as ethyl acrylate and methyl methacrylate.

The acrylonitrile, substituted acrylonitrile, or acrylic acid esters are described generically by the following formula:

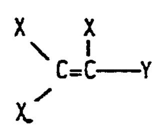

wherein X is as previously defined and Y is selected from the group consisting of cyano and carbalkoxy wnerein the alkoxy group of the carbalkoxy contains from one to about twelve caroon atoms. Examples of such monomers include acrylonitrile, ethacrylonitrile, methacrylonitrile, α-chloroacrylonitrile, β-chloroacrylonitrile, α-bromoacrylonitrile, and β-bromoacrylonitrile, methyl acrylate, methyl methacrylate, ethyl acrylate, butyl acrylate, propyl acrylate, isopropyl acrylate, and mixtures thereof. The preferred acrylic monomer is acrylonitrile and the preferred acrylic acid esters are ethyl acrylate and methyl methacrylate.

In the preparation of the graft polymer, the conjugated diolefin polymer or copolymer exemplified by a 1,3-butadiene polymer or copolymer comprises about 50% by weight of the

total graft polymer composition. The monomers polymerized in the presence of the backbone, exemplified by styrene and acrylonitrile, comprise from about 40 to about 95% by weight of the total graft polymer composition.

The second group of grafting monomers, exemplified by acrylonitrile, ethyl acrylate or methyl methacrylate, of the graft polymer composition, preferably comprise from about 10% to about 40% by weight of the total graft copolymer composition. The monovinylaromatic hydrocarbon exemplified by styrene comprise from about 30 to about 70% by weight of the total graft polymer composition.

In preparing the polymer, it is normal to have a certain percentage of the polymerizing monomers that are grafted on the backbone combine with each other and occur as free copolymer. If styrene is utilized as one of the grafting monomers and acrylonitrile as the second grafting monomer, a certain portion of the composition will copolymerize as free styrene-acrylonitrile copolymer. In the case where α-methylstyrene (or other monomer) is substituted for the styrene in the composition used in preparing the graft polymer, a certain percentage of the composition may be an α-methylstyrene-acrylonitrile copolymer. Also, there are occasions where a copolymer, such as α-methylstyrene-acrylonitrile, is added to the graft polymer copolymer blend. When the graft polymer-copolymer blend is referred to herein, it is meant optionally to include at least one copolymer blended with the graft polymer composition and which may contain up to 90% of free copolymer.

Optionally, the elastomeric backbone may be an acrylate rubber, such as one based on n-butyl acrylate, ethylacrylate, 2-ethylhexylacrylate, and the like. Additionally, minor amounts

of a diene may be copolymerized in the acrylate rubber backbone to yield improved grafting with the matrix polymer.

These resins are well known in the art and many are commercially available.

D. Poly (Alkyl Acrylate) Resin

The poly (alkyl acrylate) resin which may be used herein includes a homopolymer of methyl methacrylate (i.e. polymethyl methacrylate) or a copolymer of methyl methacrylate with a vinyl monomer (e.g. acrylonitrile, N-allylmaleimide, vinyl chloride or N-vinyl maleimide), or an alkyl acrylate or methacrylate in which the alkyl group contains from 1 to 8 carbon atoms, such as methyl acrylate, ethyl acrylate, butyl acrylate, ethyl methacrylate and butyl methacrylate. The amount of methyl methacrylate is greater than about 70 % by weight of this copolymer resin.

The alkyl acrylate resin may be grafted onto an unsaturated elastomeric backbone, such as polybutadiene, polyisoprene, and/or butadiene or isoprene copolymers. In the case of the graft copolymer, the alkyl acrylate resin comprises greater than about 50 weight percent of the graft copolymers.

These resins are well known in the art and are commercially available.

The methyl methacrylate resins have a reduced viscosity of from 0.1 to about 2.0 dl/g in a one percent chloroform solution at 25°C.

E. Polyurethanes

The thermoplastic polyurethanes which may be used herein are described in, for example, U.S. Patent 3,214,411. Particularly useful polyester resins used as starting materials for the thermoplastic polyurethanes are those produced from adipic acid and a glycol having a least one primary hydroxyl group. The

adipic acid is condensed with a suitable glycol or mixture of glycols which have at least one primary hydroxyl group. The condensation is stopped when an acid number of from about 0.5 to about 2.0 is reached. The water formed during the reaction is removed such that the final water content is from about 0.01 to about 0.2%.

Any suitable glycol may be used in the reaction with the adipic acid such as, ethylene glycol, propylene glycol, butylene glycol, hexanediol, bis-(hydroxymethylcyclohexane), 1,4-butanediol, diethylene glycol, 2,2-dimethyl propylene glycol, 1,3-propylene glycol, and the like. In addition to the glycols, a small amount of trihydric alcohol of up to about 1% may be used, such as trimethylolpropane, glycerol, hexanetriol, and the like. The resulting hydroxyl polyester has a molecular weight of at least about 600, a hydroxyl number of from about 25 to about 190 and preferably between about 40 and about 60, and acid number of between about 0.5 and about 2 and a water content of 0.01 to about 0.2%.

The diisocyanates which may be used in preparing the polyurethanes include etnylene diisocyanate, etnylidene diisocyanate, propylene diisocyanate, butylene diisocyanate, cyclopentylene-1,3-diisocyanate, cyclohexylene-1,4-diisocyanate, cyclohexylene-1,2-diisocyanate, 2,4-tolylene diisocyanate, 2,6-tolylene diisocyanate, 2,2'-diphenylmethane diisocyanate, 2,2-diphenylpropane-4,4'diisocyanate, p-phenylene diisocyanate, m-phenylene diisocyanate, xylylene diisocyanate, 1,4-naphthylene diisocyanate, 1,5-naphthylene diisocyanate, diphenyl-4,4'-diisocyanate, azobenzene-4,4' -diisocyanate, diphenyl sulfone-4,4' -diisocyanate, dichlorohexamethylene diisocyanate, pentamethylene

diisocyanate, 1-chlorobenzene-2,4-diisocyanate, furfurylidene diisocyanate, and the like.

Any suitable chain extending agent having active hydrogen containing groups reactive with isocyanate groups may be used, such as diols, including ethylene glycol, propylene glycol, 1,4-butanediol, butenediol, butynediol, xylylene glycols, amylene glycols, 1,4-phenylene-bis-β-hydroxy ethyl ether, 1,3-phenylene-bis-β-hydroxy ethyl ether, bis-(hydroxy-methyl-cyclohexane), hexanediol, and the like; diamines, including ethylene diamine, cyclohexylene diamine, phenylene diamine, tolylene diamine, xylylene diamine, 3,3'-dichlorobenzidine, 3,3'-dinitrobenzidine and the like; alkanol amines such as ethanol amine, aminopropyl alcohol, 2,2-dimethyl propanol amine, 3-aminocyclohexyl alcohol, p-aminobenzyl alcohol, and the like. If desired, a small amount of polyfunctional material may be utilized. This polyfunctional chain extender, however, should not be present in an amount greater than about 1°/• by weight. Any suitable polyfunctional compound may be used in such as glycerol, trimethylolpropane, hexanetriol, pentaerythritol, and the like.

The polyester, the organic diisocyanate and the chain extender may be individually heated to a temperature of from about 60° to about 135°C. and then the polyester and chain extender are substantially simultaneously mixed with the diisocyanate. To increase the rate of reaction, any suitable catalyst may be used, such as tertiary amines and the like. Although adipate polyesters are preferred, polyesters may be used which are based on succinic acid, suberic acid, sebacic acid, oxalic acid, methyl adipic acid, glutaric acid, pimelic acid, azelaic acid, phthalic acid, terephthalic acid, isophthalic acid and the like. Polyesters based on ε-caprolactone are also preferred.

A polyether may be used instead of the polyester in the preparation of the thermoplastic polyurethanes and preferably, polytetramethylene glycol having an average molecular weight between about 600 and about 2000. Other polyethers, such as polypropylene glycol, polyethylene glycol and the like may be used providing their molecular weight is above about 600.

The thermoplastic polyurethanes are described in, for example, U.S. Patents 2,621,166, 2,729,618, 3,214,411, 2,778,810 and 3,012,992.

F. Vinyl Chloride Polymers

The vinyl chloride polymers suitable for use herein are polyvinyl chloride and copolymers of vinyl chloride with olefinically unsaturated polymerizable compounds which contain at least 80 percent by weight of vinyl chloride incorporated therein.

Olefinically unsaturated compounds which are suitable for copolymerization include vinylidene halides, such as vinylidene chloride and vinylidene fluoride, vinyl esters, such as vinyl acetate, vinyl propionate, vinyl butyrate, vinyl chloroacetate, vinyl benzoate, acrylate and α-alkyl-acrylate and their alkyl esters, amides and nitriles, methacrylic acid, maleic acid or anhydride, methyl methacrylate, ethyl acrylate, 2-ethyl-hexyl-acrylate, butyl methacrylate, 2-hydroxypropyl acrylate, acrylamide, N-methyl acrylamide, acrylonitrile and methacrylonitrile, aromatic vinyl compounds, such as styrene and vinyl naphthalene and olefinically unsaturated hydrocarbons such as ethylene, bicyclo-[2,2,1]-hept-2-ene and bicyclo-[2,2,1]-nepta-2,5-diene. Polymerized vinyl acetate may be hydrolyzed to provide vinyl alcohol moeities in the polymer.

These vinyl chloride polymers are well known in the art

and can be prepared by the usual methods of solution, emulsion, suspension, bulk or mass polymerization.

Vinyl chloride polymers which have molecular weights of from about 40,000 to about 60,000 are preferred.

G. Poly(aryl ether)s

The poly(aryl ether) resin components suitable for use herein are linear, thermoplastic polyarylene polyether polysulfones, wherein the arylene units are interspersed with ether and sulfone linkages. These resins may be obtained by reaction of an alkali metal double salt of a dihydric phenol and a dihalobenzenoid compound, either or both of which contain a sulfone or ketone linkage i.e., $-SO_2-$ or $-CO-$ between arylene groupings, to provide sulfone or ketone units in the polymer chain in addition to arylene units and ether units. The polysulfone polymer has a basic structure comprising recurring units of the formula:

$$-O-E-O-E'-$$

wherein E is the residuum of the dihydric phenol and E' is the residuum of the benzenoid compound having an inert electron withdrawing group in at least one of the positions ortho and para to the valence bonds; both of said residua are valently bonded to the ether oxygens through aromatic carbon atoms. Such polysulfones are included within the class of polyarylene polyether resins described in U.S. patent 3,264,536, and 4,108,837, for example.

The residuum of a dihydric phenol, E is derived from dinuclear phenols having the structure:

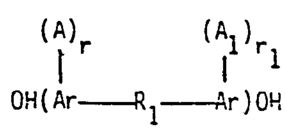

Wherein Ar is an aromatic group and preferably is a phenylene group, A and $A_1$ may be the same or different inert substitituent groups, such as alkyl groups having from 1 to 4 carbon atoms, halogen atoms, i.e., fluorine, chlorine, bromine or iodine, or alkoxy radicals having from 1 to 4 carbon atoms, r and $r_1$ are integers having a value of from 0 to 4, inclusive, and $R_1$ is representative of a bond between aromatic carbon atoms as in dihydroxydiphenyl, or is a divalent radical, including, for example, CO, O, S, S-S, $SO_2$ or a divalent organic hydrocarbon radical, such as alkylene, alkylidene, cycloalkylene, cycloalkylidene, or the halogen, alkyl, aryl, substituted alkylene, alkylidene, cycloalkylene, and cycloalkylidene radicals as well as alkarylene and aromatic radicals and a ring fused to both Ar groups.

Typical preferred polymers have recurring units having the following structure:

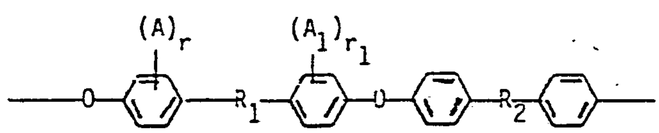

as described in U.S. Patent 4,108,837, supra. In the foregoing formula A and $A_1$ can be the same or different inert substituent groups as alkyl groups having from 1 to 4 carbon atoms, halogen atoms (e.g., fluorine, chlorine, bromine or iodine) or alkoxy radicals having from 1 to 4 carbon atoms, r and $r_1$ are integers having a value of from 0 to 4, inclusive. Typically, $R_1$ is representative of a bond between aromatic carbon atoms or a divalent connecting radical and $R_2$ represents sulfone, carbonyl, or sulfoxide. Preferably, $R_1$ represents a bond between aromatic carbon atoms. Even more preferred are the thermoplastic

polysulfones of the above formula wherein r and $r_1$ are zero, $R_1$ is a divalent connection radical of the formula

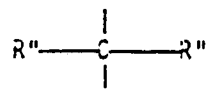

wherein R" is selected from lower alkyl, aryl, and the halogen substituted groups thereof, preferably methyl and $R_2$ is a sulfone group.

The poly(aryl ether)s have a reduced viscosity of from about 0.4 to about 1.5 dl/g as measured in an appropriate solvent at an appropriate temperature depending on the particular polyether, such as in methylene chloride at 25°C.

The preferred poly(aryl ether)s have repeating units of the formula:

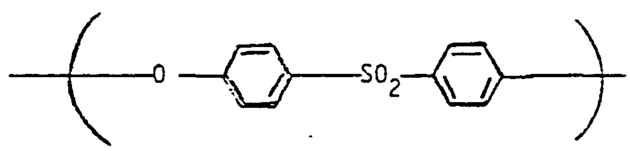

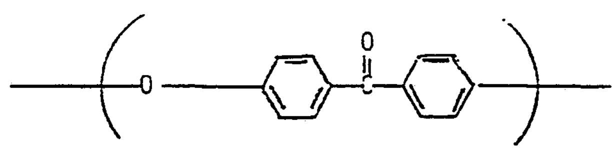 ,and

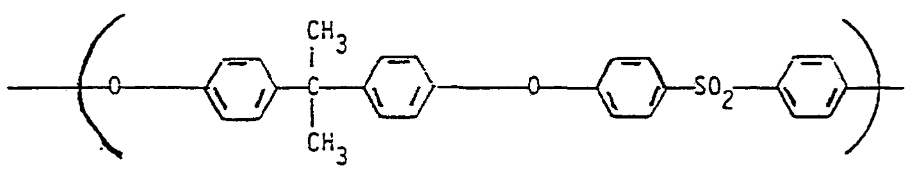

H. Copolyetherester Block Copolymer

The copolyetheresters suitable for use herein are well known in the art and are described in, for example, U.S. Patents 3,784,520 and 3,766,146.

The polyester comprises a multiplicity of recurring intralinear long chain and short chain ester units connected head-to tail through ester linkages, said long chain ester units being represented by the following structure:

$$-OGO-\overset{O}{\overset{\|}{C}}R_3\overset{O}{\overset{\|}{C}}- \qquad (a)$$

and said short chain ester units being represented by the following structure:

$$-ODO-\overset{O}{\overset{\|}{C}}R_3\overset{O}{\overset{\|}{C}}- \qquad (b)$$

wherein G is a divalent radical remaining after removal of terminal hydroxy groups from a poly(alkylene oxide) glycol having a molecular weight of from about 400 to about 3500; D is a divalent radical remaining after removal of hydroxyl groups from a low molecular weight diol having a molecular weight of less than about 250; and $R_3$ is a divalent radical remaining after removal of carboxyl groups from a dicarboxylic acid having a molecular weight of less than about 300, with the proviso that the short chain ester units constitute from about 25 to about 65% by weight of the copolyester, at least about 70% of the $R_3$ groups are 1,4-phenylene radicals, at least about 70% of the D groups are 1,4-butylene radicals, and the sum of the percentages of the $R_3$ groups which are not 1,4-phenylene radicals and of the D groups which are not 1,4-butylene radicals do not exceed about 30%.

The term "long chain ester units" as applied to units in a polymer chain refers to the reaction product of a long chain glycol with a dicarboxylic acid. Such "long chain ester units", which are a repeating unit in the copolyesters herein correspond to the Formula (a) above. The long chain glycols may be poly(alkylene oxide) glycols having a molecular weight between about 400 and about 3500, preferably between about 600 and about 2000. Copolyesters prepared from poly(alkylene oxide) glycols

having a molecular weight between about 600 to about 2000 are preferred.

The term "short chain ester units" as applied to units in a polymer chain refers to low molecular weight compounds or polymer chain units having molecular weight of less than about 550. They are made by reacting a low molecular weight diol (below about 250) with a dicarboxylic acid to form ester units represented by Formula (b) above.

Included among the low molecular weight diols (other than 1,4-butanediol) which react to form short chain ester units are acyclic, alicyclic and aromatic dihydroxy compounds. Preferred are diols with from 2 to 15 carbon atoms, such as ethylene, propylene, isobutylene, tetramethylene, pentamethylene, 2,2-dimethyl-trimethylene, hexamethylene and decamethylene glycols, dihydroxy cyclohexane, cyclohexanedimethanol, resorcinol, hydroquinone, 1,5-dihydroxy naphthalene, etc. Especially preferred are aliphatic diols containing from 2 to 8 carbon atoms. Included among the bisphenols which can be used are bis(p-hydroxy)diphenyl, bis(p-hydroxphenyl)methane, and bis(p-hydroxphenyl)propane.

Dicarboxylic acids (other than terephthalic acid) which are reacted with the foregoing long chain glycols or low molecular weight diols to produce the copolyesters are aliphatic, cycloaliphatic or aromatic dicarboxylic acids.

Representative aliphatic and cycloaliphatic acids which may be used are sebacic acid, 1,3-cyclohexane dicarboxylic acid, 1,4-cyclohexane dicarboxylic acid, adipic acid, glutaric acid, succinic acid, carbonic acid, cyclopentanedicarboxylic acid, decahydro-1,5-naphthylene dicarboxylic acid and 4,4-bicyclonexyl

dicarboxylic acid. Preferred cycloaliphatic acids are cyclohexane-dicarboxylic acids.

Representative aromatic dicarboxylic acids which may be used are phthalic, terephthalic and isophthalic acids, substituted dicarboxy compounds with two benzene nuclei, such as bis(p-carboxyphenyl)methane and p-carboxyphenyl/oxybenzoic acid. Among the aromatic acids, those with from 8 to 16 carbon atoms are preferred, particularly the phenylene dicarboxylic acids, i.e., terephthalic and isophthalic acids.

Preferably, at least about 70 mole percent of the dicarboxylic acid incorporated into the polymer is terephthalic acid and at least about 70 mole percent of the low molecular weight diol incorporated into the polymer is 1,4-butanediol. Thus, at least 70% of the $R_3$ groups in Formulae (a) and (b) above are 1,4-phenylene radicals and at least about 70% of the D groups in Formula b above are 1,4-butylene radicals.

The most preferred copolyesters are those prepared from dimethylterephthalate, 1,4-butanediol and poly(tetramethylene oxide) glycol having a molecular weight of from about 600 to about 1500.

The copolyetheresters described herein can be made conveniently by a conventional ester interchange reaction by methods well known in the art and as described in, for example, U.S. Patents 3,784,520 and 3,766,146.

I. Polyhydroxyether

The thermoplastic polyhydroxyethers which may be used herein have the following general formula

$$-\!\!\left[F-O-E''-O\right]_n\!\!-$$

where F is the radical residuum of a dihydric phenol, E" is a radical residuum of an epoxide selected from mono- and diepoxides and which contain from 1 to 2 hydroxyl groups, and n is an integer which represents the degree of polymerization and is at least about 30 and preferably is above about 80.

In general, thermoplastic polyhydroxyethers are prepared by contacting, under polymerization conditions, a dihydric phenol and an epoxide containing from 1 to 2 epoxide groups in substantially equimolar amounts by methods well known in the art.

Any dihydric phenol can be used in forming polyhydroxyethers. Illustrative dihydric phenols are mononuclear dihydric phenols such as hydroquinone, resorcinol, and the like as well as the polynuclear phenols. The dihydric polynuclear phenols have the general formula:

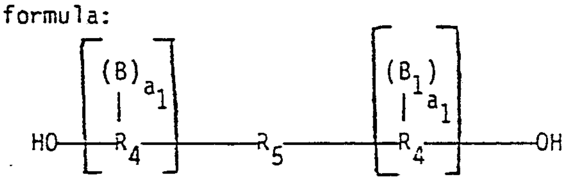

wherein $R_4$ is an aromatic divalent hydrocarbon radical, such as naphthylene and phenylene with phenylene being preferred, B and $B_1$ may be the same or different and are selected from alkyl radicals, such as methyl, n-propyl, n-butyl, n-hexyl, n-octyl and the like, preferably alkyl radicals having 1 to 4 carbon atoms; halogen atoms, i.e., chlorine, bromine, iodine, or fluorine; or alkoxy radicals such as methoxy, methoxymethyl, ethoxy, ethoxyethyl, n-butyloxy, amyloxy and the like, preferably an alkoxy radical having 1 to 4 carbon atoms, a and $a_1$ are independently integers of 0 to 4, R' is alkylene, alkylidene, cycloalkylene or a saturated divalent group. Particularly preferred are dihydric polynuclear phenols having the general formula:

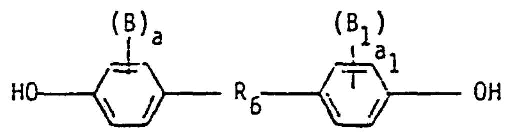

wherein B, $B_1$, a and $a_1$ are as previously defined, and $R_6$ is an alkylene or alkylidene group, preferably having from 1 to 3 carbon atoms, cycloalkylene or cycloalkylidene having 6 to 12 carbon atoms.

Diepoxides useful for the preparation of polyhydroxyethers may be represented by repeating units of the following formula

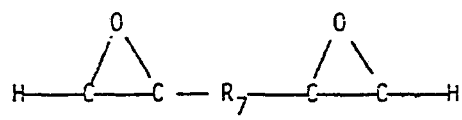

wherein $R_7$ is representative of a bond between adjacent carbon atoms or a divalent organic radical such as an aliphatic, aromatic, cyclic, heterocyclic or acyclic arrangement of atoms.

Other diepoxides which can be mentioned include those wherein two oxirane groups are linked through an aromatic ether, i.e., compounds having the grouping

$$-C-O-W-O-(R_8O)_d-C-$$

wherein $R_8$ is a divalent organic radical, W is a divalent aromatic radical residuum of a dihydric phenol, such as those listed above in the description of dihydric phenols, and d is an integer from 0 to 1 inclusive.

Still other diepoxides include ethers wherein the oxirane groups are connected to vicinal carbon atoms at least one pair of which is a part of a cycloaliphatic hydrocarbon.

These polyhydroxy ethers are prepared by methods well known in the art, such as those described in, for example, U.S.

Patents 3,238,087; 3,305,528; 3,294,747; and 3,277,051.

Other Ingredients

Other additives may be included in the composition of this invention. These additives include plasticizers; pigments; flame retardant additives, particularly, decabromodiphenyl ether and triaryl-phosphates, such as triphenylphosphate; reinforcing agents, such as glass fibers; thermal stabilizers; ultraviolet light stabilizers, processing aids, impact modifiers and the like. The impact modifiers which are particularly suitable for use herein are described in U.S. Patent 4,231,922. These impact modifiers are a graft copolymer of a vinyl aromatic, an acrylate, an unsaturated nitrile, or mixtures thereof, grafted onto an unsaturated elastomeric backbone and having a tensile modulus (as measured by ASTM D-638, except that the test piece is compression molded to a 20 mil (0,5 mm) thickness) of less than about 100,000 psi (69 000 N/$cm^2$), and preferably from about 15,000 (10 350 N/$cm^2$) to less than about 100,000 psi (69 000 N/$cm^2$).

The unsaturated elastomeric backbone may be poly-butadiene, poly(butadiene-co-styrene), poly(butadiene-co-acrylonitrile), or poly(isoprene). In each of the polymers there is sufficient butadiene to give the polymer a rubbery character.

The constituents which are grafted onto the unsaturated elastomeric backbone are selected from a vinyl aromatic, such as styrene, α-methylstyrene, alkylstyrene, or mixtures thereof; an acrylate such as the acrylic ester monomers, such as methyl acrylate, ethyl acrylate, butyl acrylate, methyl methacrylate, or mixtures thereof; an unsaturated nitrile such as acrylonitrile, methacrylonitrile, or mixtures thereof. It will be understood that the vinyl aromatic, acrylate and acrylonitrile may be used individually or in any combinations in grafting onto the unsaturated elastomeric backbone.

These impact modifiers are free-flowing powders and are commonly available as impact modifiers for poly(vinyl chloride) as described in, for example, V. Shakaypal, in "Developments in PVC Technology", edited by J.H.L. Hensen and A. Whelan, Applied Science Publisners Ltd., New York, 1973.

The grafted constituents of the impact modifier comprise from about 20 to about 60 percent by weight of said constituents such that their tensile modulus does not exceed about 100,000 psi (69 000 $N/cm^2$), and is preferably, between about 15,000 (10 350 $N/cm^2$) to less than about 100,000 (69 000 $N/cm^2$) psi.

Preparation

The compositions of this invention are prepared by any conventional mixing methods. For example, a preferred method comprises mixing the polyarylates, diphosphite and/or diphosphonite and when used, the thermoplastic polymer(s) in powder or granular form in an extruder and extruding the mixture into strands, chopping the strands into pellets and molding the pellets into the desired article.

## Examples

The following examples serve to give specific illustrations of the practice of this invention but they are not intended in any way to limit the scope of this invention.

### Examples A to C

The following examples show the preparation of various diphosphites.

### Example A

Preparation of 4,4'-bis[di-(3-isopropylphenyl)-phosphito] diphenyl sulfide.

A mixture of 43.66g (0.20 mol) of 4,4'-thiodiphenol,

164.8g (1.20 mol) of phosphorous trichloride, and 150 ml of dioxane was heated to reflux under nitrogen for 16 hours. The solvent and excess phosphorus tricloride was then distilled at 100°C under vacuum, leaving as a

residue a viscous oil, 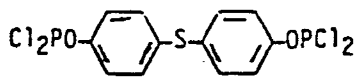, 77g,

(92%). A 10.2g (0.24 mol) portion of the latter was heated with 16.5g (0.122 mol) of 3-isopropylphenol at 140° for 8 hours. Excess 3-isopropylphenol was removed by heating at 150°C (0.05 mm) [0,0665 mbar]. The residue, 4,4'-bis[di-(3-isopropylphenyl)phosphito)] diphenyl sulfide, was a pale yellow viscous liquid. Yield: 20.0g (100.5%). Analysis for $C_{48}H_{52}O_6P_2S$: % C 70.40 (found: 69.85); % H 6.40 (6.34), % P 7.56 (6.93).

Example B

Preparation of 4,4'-bis[di-(4-isopropylphenyl)-phosphito)]diphenyl sulfone.

A mixture of 50.0g (0.20 mol) of 4,4'-dihydroxydiphenyl sulfone and 104.7 ml (1.2 mol) of phosphorous trichloride were refluxed in 200 ml of dioxane for 20 hours. The excess phosphorous trichloride and solvent were removed under vacuum, leaving a white pasty solid, $(Cl_2POPh)_2SO_2$, 90.1g (99.7%). A mixture of 3.0g (6.64 mmol) of this solid and 4.52g (33.2 mmol) of p-isopropylphenol were heated at 180°C for 3 hours. Excess phenol was removed under vacuum (150°C, 0.05 mm) [0,0665 mbar] leaving a viscous, colorless oil, which was 4,4'-bis[di-(4-isopropylphenyl)-phosphito)]diphenyl sulfone. Yield 5.6g (100%). Analysis for $C_{48}H_{52}O_8P_2S$: % P 7.28 found: 6.88.

## Example C

Preparation of the diphosphite of bispnenol-A.

A mixture of 45.65 g (0.20 mol) of bisphenol A and 104.7 ml (1.20 mol) of phosporous trichloride in 150 ml of dioxane was refluxed overnight. Excess phosphorous trichloride and the solvent were removed under vacuum, leaving a pale yellow oil, $(Cl_2PO\text{-}Ph)_2C(CH_3)_2$, 82.7g (96.1 %). A mixture of 3.0g (6.98 mmol) of this oil and 20g (87.6 mmol) of bisphenol A were refluxed in 50 ml of dioxane overnight. The solvent and excess Bisphenol A were removed under vacuum (190° 0,0133 mbar (0.01 mm)), leaving an off-wnite solid, the diphosphite of bisphenol-A, which began to melt at 107°C. Yield 8.0g (95.8%). Analysis for $C_{75}H_{74}O_{10}P_2$: % P 5.17 (found: 5.36).

## Preparation of Polyarylate

A 4-necked round bottomed flask equipped with a paddle stirrer, thermometer, ice/water condenser, and an inlet and outlet for an inert gas was charged with the following:

| | | |
|---|---|---|
| A. | isophthaloyl chloride | 75 mmol |
| B. | terephthaloyl chloride | 25 mmol |
| C. | Bisphenol A | 100 mmol |
| D. | p-phenyl phenol | 1.3 mmol |
| E. | calcium hydroxide | 200 mmol |
| F. | methylene chloride | 200 ml |

Triethylamine (0.5 mmol) is added to the stirred slurry. The mixture is maintained at 25±5°C by water cooling. After 3 hrs, the mixture is diluted with 1000 ml of methylene chloride and filtered through a Celite bed to give a colorless polymer solution, which is vigorously washed with equal volumes of 1% HCl and then distilled water until a neutral pH is reached. The

polymer is coagulated by pouring the solution into methanol in a Waring blender. The polymer is then washed once with methanol, dried in a forced air oven at 70°C overnight, and dried for 2 additional days at 120°C 0,665 mbar (0.5 mm).

Preparation of the Polyarylate Blends

A 4 weight percent solution of polyarylate in $CH_2Cl_2$ was poured into an erlenmeyer flask. The stabilizer was added and dissolved. The polymer blend was recovered by coagulation in hexanes (mixture of isomers). (The additive was insoluble in hexanes). The fluff was washed once with hexanes, dried at 70°C in a forced air oven overnight, and at 120°C 0,665 mbar (0.5 mm) for 2 days. After the first day of vacuum drying, the polymer was pressed into 9,5 mm 3/8 inch diameter pellets for use in the melt cell test.

Melt Cell Test

The color development during pelletizing was closely simulated by heating a preformed plug of polymer in a Tinius Olsen Thermodyne (melt flow cell) at 350°C. The polymer was added to the preheated chamber of the thermodyne and put under a constant pressure of 30 N/cm² 44 psi. After 10 and 30 minutes, samples of polymer were taken by allowing the polymer to flow freely from the bottom of the cavity. The criteria for stability were the $MF_{30}/MF_{10}$ ratio and the degree of color development in the $MF_{10}$ sample. A $MF_{30}/MF_{10}$ ratio of 0.5 to 2.0 is acceptable with the optimum value being 1.0.

Example 1

0.25 weight percent of the phosphite stabilizer prepared in Example B was blended as described above with the polyarylate prepared as described above. The melt flow was detemined at 10 minutes ($MF_{10}$) and 30 minutes ($MF_{30}$) at 350°C as described under the Melt Cell Test, supra.

The results are shown in Table I.

Example 2

The procedure of Example 1 was exactly repeated except that 0.50 weight percent of the phosphite stabilizer was used.

The results are shown in Table I.

Example 3

The procedure of Example 1 was exactly repeated except that 0.25 weight percent of the stabilizer of Example C was utilized.

The results are shown in Table 3.

Control A

A polyarylate was prepared as described in "Preparation of Polyarylate", supra, and the melt flow determined at 10 and 30 minutes as described under the Melt Cell Test, supra.

The results are shown in Table I.

Example 4

The procedure of Control A was exactly repeated except that 1.0 weight percent of the phosphite of Example 1 was blended with the polyarylate as described in Preparation of the Polyarylate Blends, supra.

The results are shown in Table I.

The data in Table shows that the incorporation of phosphite stabilizers in the polyarylate maintains an acceptable $MF_{30}/MF_{10}$ ratio and shows reduced color formation in the $MF_{10}$ extrudate as compared to the Controls.

TABLE I

| Example | Stabilizer | Wt. % | Temperature (°C) | $MF_{10}$ | $MF_{30}$ | $MF_{30}/MF_{10}$ | Color of extrudate |
|---|---|---|---|---|---|---|---|
| Control | - | - | 350 | 1.60 | 1.25 | 0.77 | pale yellow |
| 1 | 4,4'-bis[di-(3-isopropylphenyl) phosphito] diphenyl sulfone | 0.25 | 350 | 2.70 | 2.09 | 0.77 | almost colorless |
| 2 | " | 0.50 | 350 | 3.6 | 2.32 | 0.64 | almost colorless |
| 3 | Diphosphite of bisphenol-A | 0.25 | 350 | 3.03 | 2.06 | 0.68 | almost colorless |
| Control A | - | - | 355 | 1.24 | 1.18 | 0.95 | pale yellow |
| 4 | 4,4'-bis[di-(3-isopropylphenyl) phosphito] diphenyl sulfone | 1.0 | 355 | 1.64 | 1.60 | 0.98 | almost colorless |

## Control B

### Preparation of Polyarylate by the Diacetate Process

The reactor system consisted of a hot oil heated reactor fitted with a nitrogen inlet, mechanical agitator, and overhead column connected to an overhead take-off device consisting of a condenser and a receiver.

The reactor was charged with 33,75 kg 75.0 pounds of bisphenol diacetate, 8,91 kg 19.8 pounds of isophthalic acid, 8,91 kg 19.8 pounds of terephthalic acid and 25,87 kg 57.5 pounds of diphenyl ether (40 weight percent based on the polymer produced). The reactor system was purged with nitrogen for about 20 minutes and then the heater turned on to raise the temperature of the reactor to about 270°C. (the oil heater was set at about 300°C). Acetic acid started to distill when the temperature of the mixture reached about 235°C. Acetic acid distillation was followed by measuring its level in the receiver. After about 3.5 hours at 270°C, the power draw on the agitator began to increase which indicated a viscosity increase. The reaction was terminated after 7.5 hours at reflux. The polymer was isolated by feeding the reaction product to a twin screw four vent extruder and flashing off the solvent. The barrel temperature of the extruder was 325°C., the first vent was under a pressure of about 665 mbar 500 mm Hg, and the second vent was under a pressure of about 266 mbar 200 mm Hg, and the final vents were at about 13,3 mbar 10 mm Hg absolute. The residence time of the polymer in the extruder was 2 to 5 minutes. The polymer had a reduced viscosity of 0.70 dl/g as measured in chloroform (0.50 gm/100 ml) at 25°C.

The melt stability of the polymer was measured in a Tinius Olsen thermodyne (melt flow cell) at 375°C as described in the Melt Cell Test, supra.

The results are shown in Table II.

Example 5

The procedure of Control B was exactly repeated except that 0.7 weight percent of tetrakis [2,4-di-tert-butylphenyl]-4, 4'-biphenylene diphosphonite (Sandostab P-EPQ) was added to the polyarylate in the extruder. The polymer was then tested as described in Control B.

The results are shown in Table II.

Control C

80 weight percent of a polyarylate (prepared from bisphenol-A and a mixture of 50 mole percent of terephthalic acid chloride and 50 mole percent of isophthalic acid chloride by conventional methods) having a reduced viscosity of 0.66 dl/g as measured in p-chlorophenol at 49°C was blended with 20 weight percent of a poly(ethylene terephthalate) having an intrinsic viscosity of 0.64 as measured in 60:40 phenol/tetrachloroethane at 23°C were blended in an extruder at about 300°C. The mixture was then tested as described in Control B.

The results are shown in Table II.

Example 6

To the blend of Control C was added 1.0 weight percent of Sandostab P-EPQ in the extruder. The blend was then tested as described in Control B except that the temperature was 325°C.

The results are shown in Table II.

The data in the Table shows that the addition of the stabilizer to the polymer yielded a lighter colored extrudate and eliminated the foaming observed with the Controls.

TABLE II

| Example | Stabilizer | Wt.% | Temperature (°C) | Melt Flow (dg/min) $MF_{10}$ | Melt Flow (dg/min) $MF_{30}$ | $MF_{30}/MF_{10}$ | Color of Extrudate | Extrudate after 10 min. |
|---|---|---|---|---|---|---|---|---|
| Control B | - | - | 375 | 22.2 | 48.8 | 2.20 | deep yellow | foamed |
| 5 | Sandostab P-EPQ | 0.7 | 375 | 7.1 | 7.7 | 1.09 | yellow | not foamed |
| Control C | - | - | 325 | 7.5 | 11.3 | 1.5 | yellow | foamed |
| 6 | Sandostab P-EPQ | 1.0 | 325 | 8.1 | 14.6 | 1.8 | light yellow | not foamed |

Controls D to H

In these Controls, polyarylates were prepared using the procedure as described in Control B. The reduced viscosity of the polyarylate produced was measured in chloroform (0.50 gm/100 ml) at 25°C.

The melt stability of the polyarylate was measured as described in Control B.

The results are shown in Table III.

Examples 7 to 11

To the polyarylates designated as Controls D to H, was added tetrakis [2,4-di-tert-butylphenyl]-4, 4'-biphenylene diphosphonite (Sandostab P-EPQ) in the amount shown in Table III. The reduced viscosity and the melt stability of the polyarylate was measured as described in Control B.

The results are shown in Table III.

The data in Table III shows the effectiveness of the diphosphonite stabilizer when added to the polyarylate in that the melt flow change between 10 minutes and 30 minutes at 375°C is lower in the stabilized polyarylate. Additionally, no foaming is seen in the stabilized polyarylate.

TABLE III

| Example | Reduced Viscosity (dl/g) | Stabilizer | wt.% | Melt Flow ug/min $MF_{10}$ | $MF_{30}$ | $MF_{30}/MF_{10}$ | Extrudate after 10 min. |
|---|---|---|---|---|---|---|---|
| Control D | 0.69 | - | - | 9.3 | 12.7 | 1.36 | foamed |
| 7 | 0.77 | Sandostab P-EPQ | 0.70 | 4.6 | 5.0 | 1.09 | not foamed |
| Control E | 0.69 | - | - | 11.3 | 13.6 | 1.20 | foamed |
| 8 | 0.74 | Sandostab P-EPQ | 0.70 | 8.2 | 9.4 | 1.15 | not foamed |
| Control F | 0.63 | - | - | 8.2 | 18.2 | 2.22 | foamed |
| 9 | 0.65 | Sandostab P-EPQ | 0.70 | 4.9 | 4.6 | 0.93 | not foamed |
| Control G | 0.70 | - | - | 3.9 | 5.9 | 1.50 | foamed |
| 10 | 0.72 | Sandostab P-EPQ | 0.65 | 3.7 | 3.7 | 1.00 | not foamed |
| Control H | 0.75 | - | - | 5.6 | 16.6 | 2.96 | foamed |
| 11 | 0.76 | Sandostab P-EPQ | 0.25 | 6.2 | 6.3 | 1.02 | not foamed |

WHAT IS CLAIMED IS:

1. A molding composition comprising a blend of:

(a) a polyarylate derived from a dihydric phenol and an aromatic dicarboxylic acid, and

(b) a diphosphite and/or diphosphonite of the following formula:

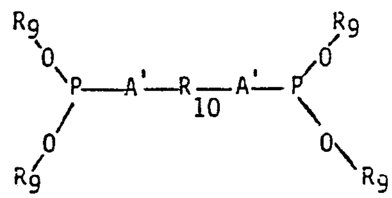

wherein A' is O or a bond; $R_{10}$ is an aromatic radical and the $R_9$'s are independently alkyl or aromatic radicals.

2. A composition as defined in claim 1 wherein the dihydric phenol is of the formula:

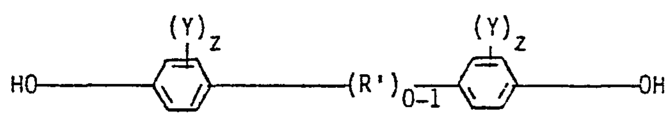

wherein Y is selected from alkyl groups of 1 to 4 carbon atoms, chlorine or bromine, each z, independently, has a value of from 0 to 4, inclusive, and R' is a divalent saturated or unsaturated aliphatic hydrocarbon radical selected from alkylene and alkylidene radicals having from 1 to 3 carbon atoms, and cycloalkylene or cycloalkylidene radicals having up to and including 9 carbon atoms.

3. A composition as defined in claim 2 wherein each z is 0 and R' is an alkylidene radical of 3 carbon atoms.

4. A composition as defined in claim 1 wherein the aromatic dicarboxylic acid is a mixture of isophthalic and terephthalic acids.

5. A composition as defined in claim 1, wherein the diphosphite and/or diphosphonite is of the following formula:

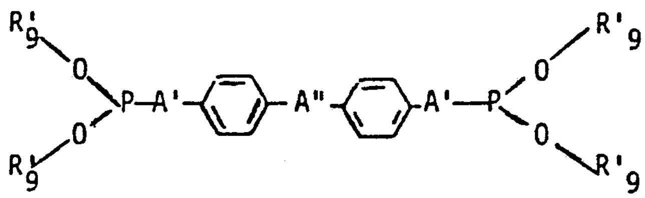

wherein A' is as defined above, A" is a direct bond, S, $SO_2$, O, CO, alkylene or alkylidene containing from 2 to 8 carbon atoms and the $R_9$'s are independently aliphatic radicals containing from 1 to 25 carbon atoms or substituted or unsubstituted aromatic radicals of from 6 to 30 carbon atoms.

6. A composition as defined in claim 5 wherein $R_9$' is of the following formula:

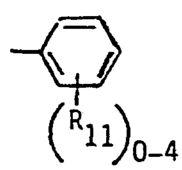

wherein $R_{11}$ is independently alkyl of 1 to 6 carbon atoms or of the following formula:

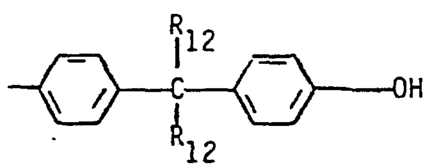

wherein $R_{12}$ is independently alkyl of 1 to 6 carbon atoms.

7. A composition as defined in claim 5 wherein the diphosphonite is tetrakis [2,4-di-tert-butylphenyl]-4,4'-biphenylene diphosphonite.

8. A composition as defined in claim 5 wherein the diphosphite has the following formula:

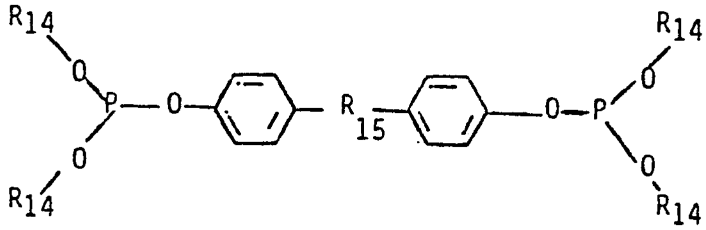

wherein $R_{15}$ is selected from S, $SO_2$, CO, $C(CH_3)_2$, and $R_{14}$ is selected from the following:

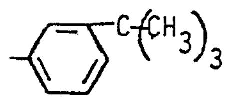

,

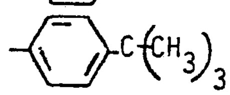

,

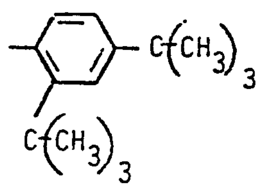

or

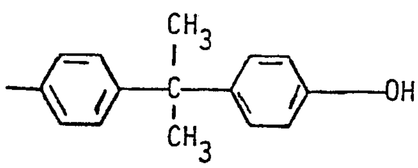

9. A composition as defined in claim 1 to 8 wherein the polyarylate is present in amounts of from about 20 to about 99.98 percent by weight, preferably in amounts of from about 60 to about 99.95 percent by weight.

10. A composition as defined in claim 1 to 9 wherein the diphosphite and/or diphosphonite is present in amounts of from 0.02 to about 2.5 percent by weight, preferably in amounts of from about 0.05 to about 0.50 percent by weight.

11. A composition as defined in claim 1 to 10 which contains a thermoplastic polymer selected from the group consisting of a polyester, an aromatic polycarbonate, a styrene polymer, a (polyalkyl acrylate) polymer, a polyurethane, a vinyl chloride polymer, a poly(aryl ether), a copolyetherester block copolymer, a polyhydroxyether, and combinations thereof.

12. A composition as defined in claim 11 wherein the polyester has repeating units of the general formula:

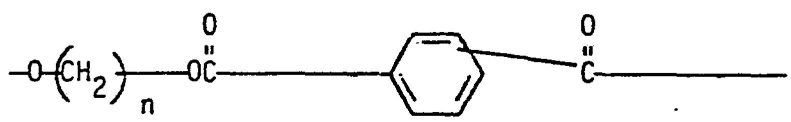

wherein n is an integer of from 2 to 4, preferably poly(ethylene terephthalate), or recurring units of the following formula:

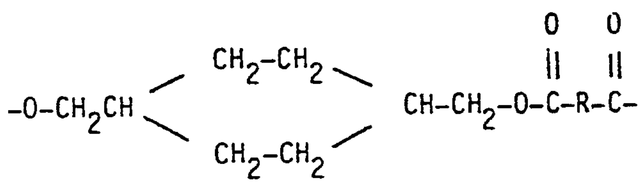

wherein the cyclohexane ring is selected from the cis- and trans- isomers thereof and R represents an aryl radical containing 6 to 20 carbon atoms preferably is the $-C_6H_4-$group and which is the decarboxylated residue derived from an aromatic dicarboxylic acid or recurring units of the following formula:

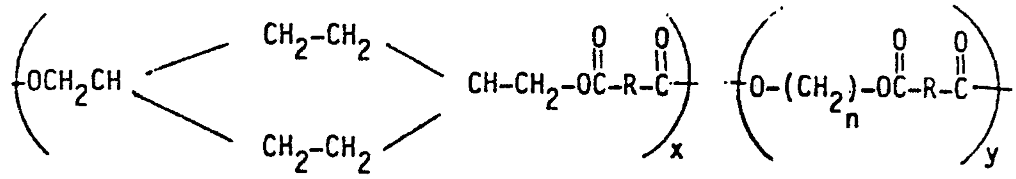

wherein the cyclohexane ring is selected from the cis- and trans-isomers thereof, R is as previously defined preferably $-C_6H_4-$ n is an integer of 2 to 4, the x units comprise from about 10 to about 90 percent by weight and the y units comprise from about 10 to about 90 percent by weight.

13. A compostion as defined in claim 11 wherein the aromatic polycarbonate is the reaction product of a dihydric phenol and a carbonate precursor, preferably the reaction product of bisphenol-A and carbonyl chloride.

14. A composition as defined in claim 11 wherein the styrene polymer is prepared by polymerizing a conjugated diene monomer or a conjugated diene monomer with a monomer copolymerizable therewith or an acrylic acid ester to provide an elastomeric backbone and thereafter grafting at least one grafting monomer onto said backbone.

15. A composition as defined in claim 14 wherein the conjugated diene monomer is butadiene and the grafting monomer is selected from styrene, an acrylonitrile, an acrylic acid ester, or mixtures thereof.

16. A composition as defined in claim 15 wherein the styrene resin is a butadiene/styrene/acrylonitrile resin.

17. A composition as defined in claim 11 wherein the poly(alkyl acrylate) is poly(methyl methacrylate) or a copolymer of methyl methacrylate and a vinyl monomer wherein the amount of methyl methacrylate is greater than about 70 percent by weight of the copolymer.

18. A composition as defined in claim 17. wherein the vinyl monomer is selected from acrylonitrile, N-allylmaleimide, vinyl chloride, N-vinylmaleimide or an alkyl acrylate or methacrylate, wherein the alkyl group contains from 1 to 8 carbon atoms.

19. A composition as defined in claim 11 wherein the poly(alkyl acrylate) is an alkyl acrylate grafted onto an unsaturated elastomeric backbone, wherein the alkyl acrylate comprises greater than about 50 weight percent of the graft copolymer formed.

20. A composition as defined in claim 11 wherein the polyurethane is derived from a polyester resin having a molecular weight of at least about 600 or from a polyether an organic diisocyanate, and a low molecular weight chain extender having active hydrogen containing groups which are reactive with the diisocyanate.

21. A composition as defined in claim 20 wherein the polyether is selected from polytetrametnylene glycol having an average molecular weight between about 600 and about 2000, polypropylene glycol, and polyethylene glycol having a molecular weight above about 600.

22. A composition as defined in claim 11 wherein the poly(vinyl chloride) polymer is a copolymer of vinyl chloride with an olefinically unsaturated polymerizable compound which contains at least about 80 percent by weight of vinyl chloride incorporated tnerein.

23. A composition as defined in claim 11 wherein the poly(aryl ether) comprises recurring units of the formula:

$$-O-E-O-E'$$

wherein E is the residuum of a dihydric phenol and E' is the residuum of a benzenoid compund having an inert electron withdrawing group or recurring units having the formula:

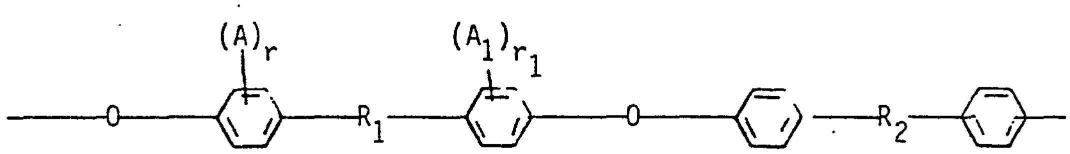

A and $A_1$ can be the same or different inert substituent groups and are selected from alkyl groups having from 1 to 4 carbon atoms, fluorine, chlorine, bromine, iodine, or alkoxy radicals having from 1 to 4 carbon atoms, $R_1$ represents a bond between aromatic carbon atoms or a divalent connecting radical, - preferably $>C(CH_3)_2$, $R_2$ is sulfone, carbonyl or sulfoxide, preferably $SO_2$, r and $r_1$ are integers having a value of from 0 to 4, inclusive preferably 0.

24. A composition as defined in claim 11 wherein the copolyetherester block copolymer has a multiplicity of recurring intralinear long chain and short chain ester units connected head-to-tail through ester linkages, said long chain ester units being represented by the following structure:

$$-O-GO-\overset{O}{\overset{\|}{C}}-R_3-\overset{O}{\overset{\|}{C}}-$$

and said short chain ester units being represented by the following structure

$$-ODO-\overset{O}{\overset{\|}{C}}-R_3-\overset{O}{\overset{\|}{C}}-$$

wherein G is a divalent radical remaining after removal of terminal hydroxy groups from a poly(alkylene oxide) glycol having a molecular weight of from about 400 to about 3500, D is a divalent radical remaining after removal of hydroxyl groups from a low molecular weight diol, and $R_3$ is a divalent radical remaining after removal of carboxyl groups from a dicarboxylic acid; with the provisos that the short chain ester units constitute from about 25 to 65 % by weight of the copolyester, at least about 70 % of the $R_3$ groups are 1,4-phenylene radicals, at least about 70 % of the D groups are 1,4-butylene radicals, and the sum of the percentages of the $R_3$ groups which are not 1,3-phenylene radicals and of the D groups which are not 1,4-butylene radicals do not exceed about 30 %.

25. A composition as defined in claim 11 wherein the polyhydroxyether has the general formula

$$\left[F-O-E''-O\right]_n$$

- 48 -

wherein F is the radical residuum of a dihydric phenol, E" is a radical residuum of an epoxide selected from mono-and diepoxides containing from 1 to 2 hydroxyl groups and n is an integer which represents the degree of polymerization and is at least about 30.

26. A diphosphite of the following formula:

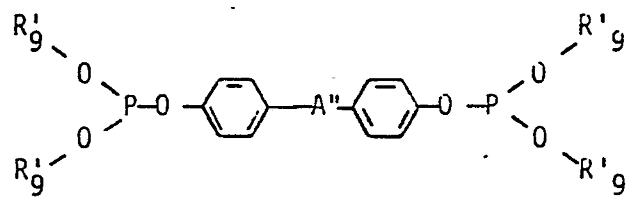

wherein "A" is a direct bond, S, $SO_2$, O, CO, alkylene or alkylidene of from 2 to 8 carbon atoms and the $R_9$'s are independently aliphatic radicals containing from 1 to 25 carbon atoms or substituted or unsubstituted aromatic radicals of from 6 to 30 carbon atoms.

27. A diphosphite as defined in claim 26 wherein $R_9'$ is of the following formula:

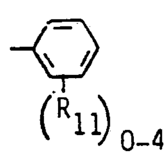

wherein $R_{11}$ is independently alkyl of 1 to 6 carbon atoms or of the following formula:

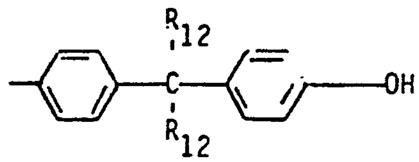

wherein $R_{12}$ is independently alkyl of 1 to 6 carbon atoms.

28. A diphosphite of the following formula:

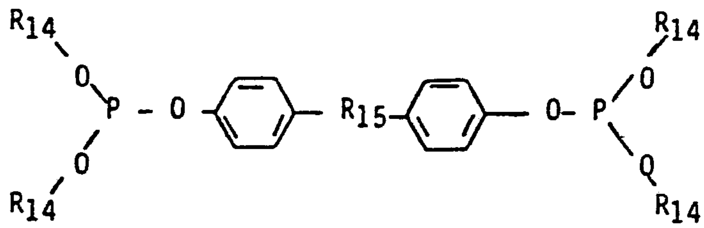

wherein $R_{15}$ is selected from a direct bond, O, S, $SO_2$, CO, $C(CH_3)_2$ , and $R_{14}$ is selected from the following:

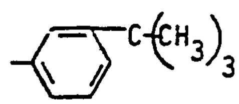

,

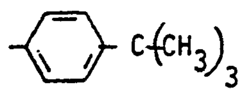

,

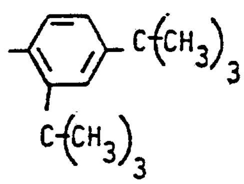

, or

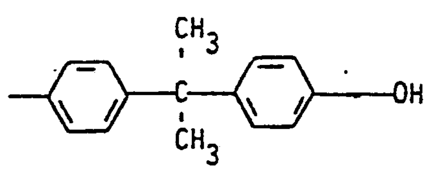

0054308

European Patent Office

# EUROPEAN SEARCH REPORT

Application number

EP 81 11 0506.3

## DOCUMENTS CONSIDERED TO BE RELEVANT

| Category | Citation of document with indication, where appropriate, of relevant passages | Relevant to claim |
| --- | --- | --- |
| X | Patent Abstracts of Japan Vol. 4, No. 7, 19 January 1980 page 98C70 & JP - A - 54 - 142260 -- | 1,11, 12, 26-28 |
| Y | EP - A2 - 0 004 363 (TORAY INDUSTRIES, INC.) * claims 1 to 3 * -- | 1,2, 11,12 |
| Y | US - A - 4 107 138 (HOFER et al.) * claims 1, 3, 5, 7, 10, 12 * -- | 1,5-7, 11 |
| A | Patent Abstracts of Japan Vol. 4, No. 159, 6 November 1980 page 7C30 & JP - A - 55 - 102646 -- | 1,11 |
| A | US - A - 4 077 940 (C.J. WEDEL) * claim 1 * -- | 7 |
| X | DE - A - 1 543 657 (HOOKER CHEMICAL CORP.) * claim 1; formula * & GB - A - 1 155 971 -- | 26-28 |
| X | DE - B - 1 518 137 (S.A. ARGUS CHEMICAL N.V.) * example 4 * -- ./.. | 26,28 |

CLASSIFICATION OF THE APPLICATION (Int. Cl. 3)

C 08 L 67/02
C 07 F 9/145
C 08 K 5/52

TECHNICAL FIELDS SEARCHED (Int.Cl. 3)

C 07 F 9/141
C 07 F 9/142
C 07 F 9/145
C 08 K 5/52
C 08 K 5/53
C 08 L 67/02
C 08 L 85/02

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

X The present search report has been drawn up for all claims

| Place of search | Date of completion of the search | Examiner |
| --- | --- | --- |
| Berlin | 08-03-1982 | WIBMER |

EPO Form 1503.1 06.78

European Patent Office

# EUROPEAN SEARCH REPORT

Application number
EP 81 11 0506.3



| DOCUMENTS CONSIDERED TO BE RELEVANT | | | CLASSIFICATION OF THE APPLICATION (Int. Cl.3) |
|---|---|---|---|
| Category | Citation of document with indication, where appropriate, of relevant passages | Relevant to claim | |
| X | DE - B - 1 494 117 (HOOKER CHEMICAL CORP.)<br>* claim 1 *<br>& US - A - 3 484 506<br>-- | 26-28 | |
| A | DE - A1 - 2 715 589 (CIBA-GEIGY AG)<br>* claim 1 *<br>& GB - A - 1 540 504<br>---- | 26-28 | |
| | | | TECHNICAL FIELDS SEARCHED (Int. Cl.3) |